# EUROPÄISCHE PATENTSCHRIFT

(11) **EP 3 515 787 B1**
(45) Veröffentlichungstag und Bekanntmachung des Hinweises auf die Patenterteilung: **16.02.2022**
(21) Anmeldenummer: 17798116.4
(22) Anmeldetag: 25.10.2017
(51) Int. Cl.: B61L 25/02

(54) **VERFAHREN ZUR POSITIONSBESTIMMUNG EINES SCHIENENFAHRZEUGS UND SCHIENENFAHRZEUG MIT POSITIONSBESTIMMUNGSEINRICHTUNG**
METHOD FOR DETERMINING THE POSITION OF A RAIL VEHICLE AND RAIL VEHICLE HAVING A POSITION DETERMINING DEVICE
PROCÉDÉ DE DÉTERMINATION DE LA POSITION D'UN VÉHICULE FERROVIAIRE ET VÉHICULE FERROVIAIRE AVEC SYSTÈME DE DÉTERMINATION DE POSITION

(30) Priorität: 25.11.2016 DE 102016223439
(43) Veröffentlichungstag der Anmeldung: 31.07.2019
(73) Patentinhaber: Siemens Mobility GmbH, 81739 München (DE)
(72) Erfinder: METSCHKE, Lena, 38350 Helmstedt (DE); HAMMERL, Malte, 38106 Braunschweig (DE)
(86) Internationale Anmeldenummer: PCT/EP2017/077279
(87) Internationale Veröffentlichungsnummer: WO 2018/095681

(56) Entgegenhaltungen:
- EP-A1- 0 795 455
- DE-A1-102015 203 476
- DE-T2- 60 006 370

## Beschreibung

Die Erfindung bezieht sich auf ein Verfahren zur Positionsbestimmung eines auf einer Schienenstrecke fahrenden Schienenfahrzeugs, wobei bei dem Verfahren ein Radarsignal ausgesandt wird, ein zurückkommendes Radarsignal empfangen wird und der Ort des Schienenfahrzeugs unter Heranziehung der Radarsignale bestimmt wird. Ein solches Verfahren ist aus der deutschen Offenlegungsschrift DE 195 32 104 C1 bekannt.

Ein weiteres Verfahren zur Positionsbestimmung auf der Basis eines Radarsignals ist aus der Offenlegungsschrift EP 0 795 455 A1 bekannt.

Die Druckschrift DE 10 2015 203 476 A1 lehrt ein Verfahren zur Wegstreckenmessung mittels Radar.

In der Druckschrift DE 600 06 370 T2 sind Transponder zur Fahrzeugdetektion offfenbart.

Der Erfindung liegt die Aufgabe zugrunde, ein Verfahren zur Positionsbestimmung eines Schienenfahrzeugs anzugeben, das sich besonders einfach, aber dennoch sehr zuverlässig und mit hoher Genauigkeit durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass in Richtung des die Schienenstrecke tragenden Bodens ein Bodenradarsignal gestrahlt wird, das in den Boden mit einer mittleren Eindringtiefe von mindestens einem halben Meter eindringt und aus dem Bodeninneren - zumindest zum Teil - als Antwortsignal in Form eines Tiefenprofilsignals des Bodens zum Schienenfahrzeug zurückgelangt, das Antwortsignal unter Bildung einer Untergrundinformation, die eine Tiefenprofilinformation des Bodens ist, ausgewertet wird, die Untergrundinformation mit für die Schienenstrecke vorab erfassten und ortsbezogen abgespeicherten Untergrundinformationen verglichen wird, anhand des Vergleichsergebnisses eine bodenradarbasierte Ortsangabe ermittelt wird und die Position des Schienenfahrzeugs auf der Schienenstrecke fahrzeugseitig zumindest auch anhand der bodenradarbasierten Ortsangabe bestimmt wird.

Ein wesentlicher Vorteil des erfindungsgemäßen Verfahrens besteht darin, dass sich in einfacher Weise eine sehr hohe Ortungsgenauigkeit erreichen lässt. Das beschriebene Verfahren kann allein zur Positionsbestimmung des Schienenfahrzeugs eingesetzt werden oder in Kombination mit anderen weiteren Verfahren zur Ortsbestimmung. Das Charakterisieren von Bodenstrukturen bzw. der oberen Bodenschicht des Bodens mittels Bodenradarstrahlen ist auf dem Gebiet der Geophysik bekannt.

Die bodenradarbasierte Ortsangabe O und/oder eine mit dieser gebildete Positionsangabe kann in vorteilhafter Weise im Zusammenhang mit folgenden Anwendungen bzw. mit der Lösung folgender Problemstellungen verwendet werden:
- Kuppeln von Zügen
- Präzises Halten, z. B. an Bahnsteigtüren
- Dichtes Abstellen zu einem anderen Zug und/oder zum Gleisabschluss
- Sichere Abstandshaltung
- Kollisionsvermeidung
- Gleisbesetztmeldung
- Fahrgastinformation
- Steuerung von Zügen

Als vorteilhaft wird es angesehen, wenn das Bodenradarsignal mit einer am Fahrzeugboden des Schienenfahrzeugs angeordneten Sende- und Empfangseinheit in einen Abschnitt des Gleisoberbaus eingestrahlt wird, der unterhalb des Schienenfahrzeugs liegt, das zurückkommende Bodenradarsignal mit der genannten oder einer anderen am Fahrzeugboden des Schienenfahrzeugs angeordneten Sende- und Empfangseinheit gemessen und unter Bildung der Untergrundinformationen ausgewertet wird.

Die Position des Schienenfahrzeugs auf der Schienenstrecke wird bei einer bevorzugten Ausführungsvariante ausschließlich anhand der bodenradarbasierten Ortsangabe bestimmt.

Bei einer alternativen, aber ebenfalls bevorzugten Ausführungsform ist vorgesehen, dass mindestens eine weitere Orts-, Weg- und/oder Geschwindigkeitsangabe ermittelt wird und mit der bodenradarbasierten Ortsangabe und der zumindest einen weiteren Orts-, Weg- und/oder Geschwindigkeitsangabe die Positionsbestimmung erfolgt.

Bei der letztgenannten Variante ist es vorteilhaft, wenn schienenstreckenseitig Ortsmarken installiert sind und fahrzeugseitig eine Ortsmarkenerkennungseinrichtung vorgesehen ist, die anhand empfangener Ortsmarkensignale die mindestens eine weitere Orts-, Weg- und/oder Geschwindigkeitsangabe erzeugt.

Alternativ oder zusätzlich kann vorgesehen sein, dass fahrzeugseitig eine Geschwindigkeits- oder Wegmesseinrichtung vorgesehen ist, die anhand eines gemessenen Wegstreckenmesswerts die mindestens eine weitere Orts-, Weg- und/oder Geschwindigkeitsangabe erzeugt.

Als Bodenradarsignal wird erfindungsgemäß ein Radarpulssignal oder ein frequenzmoduliertes Dauerstrichradarsignal in den Boden gestrahlt, und zwar mit einer Strahlleistung, die ein Eindringen des Bodenradarsignals mit einer mittleren Eindringtiefe von mindestens einem halben Meter in den Boden ermöglicht.

Die Erfindung bezieht sich außerdem auf ein Verfahren zum Betreiben von Schienenfahrzeugen. Erfindungsgemäß ist bezüglich eines solchen Verfahrens vorgesehen, dass die Schienenfahrzeuge ihre jeweilige Position nach einem der voranstehenden Verfahren unter Bestimmung von Positionsangaben ermitteln und die Schienenfahrzeuge ihre Positionsangaben zu einer streckenseitigen Einrichtung oder zu anderen Fahrzeugen übermitteln.

Die Erfindung bezieht sich darüber hinaus auf ein Schienenfahrzeug nach Anspruch 8.

Bezüglich der Vorteile des erfindungsgemäßen Schienenfahrzeugs sei auf die obigen Ausführungen verwiesen.

Vorteilhaft ist es, wenn die Positionsbestimmungseinrichtung eine die jeweilige Position des Schienenfahrzeugs auf der Schienenstrecke angebende Positionsangabe ausschließlich anhand der bodenradarbasierten Ortsangabe erzeugt.

Alternativ kann vorgesehen sein, dass die Positionsbestimmungseinrichtung mindestens eine weitere fahrzeugseitige Einrichtung zur Ermittlung mindestens einer weiteren Orts-, Weg- und/oder Geschwindigkeitsangabe aufweist und die Positionsbestimmungseinrichtung eine die jeweilige Position des Schienenfahrzeugs auf der Schienenstrecke angebende Positionsangabe anhand der bodenradarbasierten Ortsangabe und der zumindest einen weiteren Orts-, Weg- und/oder Geschwindigkeitsangabe erzeugt.

Das Schienenfahrzeug umfasst vorzugsweise eine mit der Positionsbestimmungseinrichtung in Verbindung stehende Kommunikationseinrichtung, die die bodenradarbasierte Ortsangabe oder eine damit gebildete, die jeweilige Position des Schienenfahrzeugs angebende Positionsangabe an eine streckenseitige Einrichtung oder andere Fahrzeuge übermittelt.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, anhand dessen ein Ausführungsbeispiel für eine mögliche Durchführung des erfindungsgemäßen Verfahrens beschrieben wird,
- Figur 2: ein weiteres Ausführungsbeispiel für ein erfindungsgemäßes Schienenfahrzeug, anhand dessen ein weiteres Ausführungsbeispiel für eine mögliche Durchführung des erfindungsgemäßen Verfahrens beschrieben wird, und
- Figur 3: eine Anordnung mit einem Ausführungsbeispiel für ein erfindungsgemäßes Fahrzeug sowie einem Ausführungsbeispiel für eine streckenseitige Einrichtung, die mit dem Schienenfahrzeug kommuniziert.

In den Figuren werden der Übersicht halber für identische oder vergleichbare Komponenten stets dieselben Bezugszeichen verwendet.

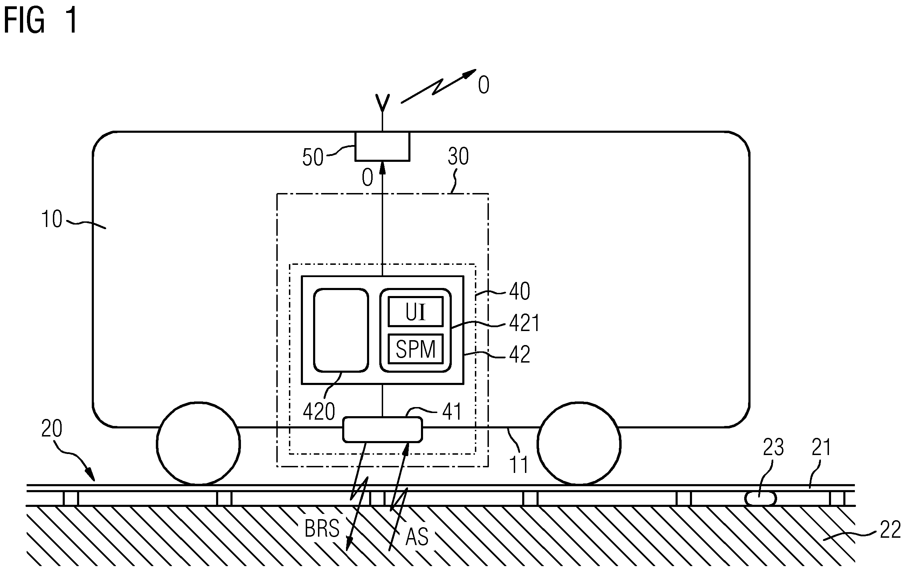

Die Figur 1 zeigt ein Schienenfahrzeug 10, das eine Schienenstrecke 20 befährt. Das Schienenfahrzeug 10 weist eine Positionsbestimmungseinrichtung 30 auf, die eine bodenradarbasierte Ortungseinrichtung 40 umfasst oder - wie bei dem Ausführungsbeispiel gemäß Figur 1 - allein durch die bodenradarbasierte Ortungseinrichtung 40 gebildet ist.

Die bodenradarbasierte Ortungseinrichtung 40 ist mit einer Sende- und Empfangseinheit 41 ausgestattet, die mit einer Steuereinrichtung 42 in Verbindung steht. Die Steuereinrichtung 42 kann durch eine Recheneinrichtung 420 und einen Speicher 421 gebildet sein, in dem ein die Arbeitsweise der Steuereinrichtung 42 festlegendes Steuerprogrammmodul SPM sowie vorab anhand der Schienenstrecke 20 erfasste Untergrundinformationen UI abgespeichert sind. Die Erfassung der abgespeicherten Untergrundinformationen UI kann beispielsweise von dem Schienenfahrzeug 10 bei vorangegangenen Fahrten oder von anderen Schienenfahrzeugen durchgeführt worden sein, und zwar vorzugsweise durch Aufnahmen bodenradarbasierter Antwortsignale zu ausgesandten Bodenradarsignalen, wobei die Aufzeichnung und Abspeicherung der Antwortsignale ortsabhängig, und zwar in Abhängigkeit von dem mittels anderer Ortungseinrichtungen ermittelten oder aus anderen Gründen bekannten Ort auf der Schienenstrecke erfolgt.

Das Schienenfahrzeug 10 weist außerdem eine Kommunikationseinrichtung 50 auf, die mit der bodenradarbasierten Ortungseinrichtung 40 in Verbindung steht und von der bodenradarbasierten Ortungseinrichtung 40 erzeugte bodenradarbasierte Ortungsangaben O aussenden kann, beispielsweise an andere Schienenfahrzeuge und/oder an eine streckenseitige Einrichtung.

Die bodenradarbasierte Ortungseinrichtung 40 kann beispielsweise wie folgt betrieben werden:
Die Steuereinrichtung 42 steuert die Sende- und Empfangseinheit 41 derart an, dass diese ein Bodenradarsignal BRS in Richtung des Gleisoberbaus 21 der Schienenstrecke 20 sendet. Zu diesem Zweck ist die Sende- und Empfangseinheit 41, die beispielsweise eine oder mehrere Radarantennen aufweisen oder durch eine oder mehrere solcher gebildet sein kann, vorzugsweise im Bereich des Fahrzeugbodens 11 oder unmittelbar am Fahrzeugboden 11 des Schienenfahrzeugs 10 angeordnet.

Das Bodenradarsignal BRS dringt in den die Schienenstrecke 20 tragenden Boden 22 ein, vorzugsweise mindestens einen halben Meter, und gelangt aus dem Bodeninneren des Bodens 22 - zumindest zum Teil - durch Reflexion, Beugung und/oder Streuung als Antwortsignal AS zum Schienenfahrzeug 10 bzw. zur Sende- und Empfangseinheit 41 zurück.

Das Antwortsignal AS wird von der Sende- und Empfangseinheit 41 zur Steuereinrichtung 42 übertragen, deren Recheneinrichtung 420 anhand der vorab erfassten und im Speicher 421 abgespeicherten Untergrundinformationen UI eine bodenradarbasierte Ortsangabe O erzeugt. Beispielsweise kann die Recheneinrichtung 420 das Antwortsignal AS mit Blick auf charakteristische Merkmale analysieren und - bei Vorliegen solcher charakteristischen Merkmale - die abgespeicherten Untergrundinformationen UI hinsichtlich des Vorliegens eben dieser charakteristischen Merkmale überprüfen. Im Falle einer Identität oder - nach vorgegebenen Kriterien - hinreichender Ähnlichkeit zwischen dem Antwortsignal oder den darin erkannten charakteristische Merkmalen und den abgespeicherten Untergrundinformationen UI bzw. den darin enthaltenen charakteristischen Merkmalen schließt die Recheneinrichtung 420 darauf, dass sich das Schienenfahrzeug 10 an derjenigen Stelle befindet, an der seinerzeit die Referenzmessung durchgeführt und die Untergrundinformationen UI erfasst worden waren.

Bei dem Ausführungsbeispiel gemäß Figur 1 wird die Positionsbestimmungseinrichtung 30 ausschließlich durch die bodenradarbasierte Ortungseinrichtung 40 gebildet; demgemäß wird eine die jeweilige Position des Schienenfahrzeugs 10 auf der Schienenstrecke 20 angebende Positionsangabe der Positionsbestimmungseinrichtung 30 allein durch die bodenradarbasierte Ortsangabe O gebildet.

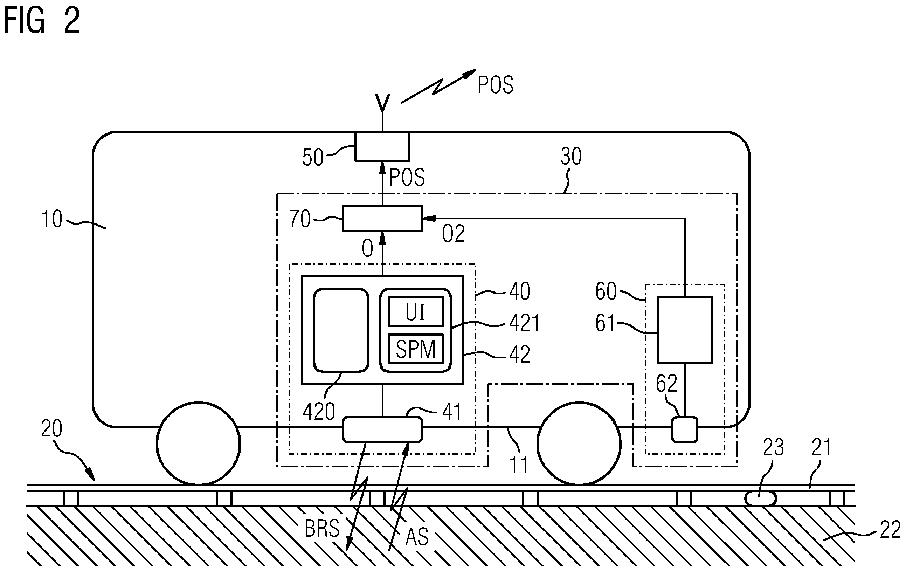

Die Figur 2 zeigt ein weiteres Ausführungsbeispiel für ein Schienenfahrzeug 10. Bei dem Ausführungsbeispiel gemäß Figur 2 weist die Positionsbestimmungseinrichtung 30 zusätzlich zu der bodenradarbasierten Ortungseinrichtung 40 eine weitere fahrzeugseitige Einrichtung 60 auf, die dazu dient, eine weitere Orts-, Weg- und/oder Geschwindigkeitsangabe O2 zu erzeugen.

Bei dem Ausführungsbeispiel gemäß Figur 2 ist die Positionsbestimmungseinrichtung 30 außerdem mit einer Auswerteinrichtung 70 ausgestattet, die mit der bodenradarbasierten Ortungseinrichtung 40 sowie der weiteren fahrzeugseitigen Einrichtung 60 in Verbindung steht und die bodenradarbasierte Ortsangabe O sowie die weitere Orts-, Weg- und/oder Geschwindigkeitsangabe O2 auswertet und mit diesen ausgangsseitig eine Positionsangabe POS erzeugt, die die jeweilige Position des Schienenfahrzeugs 10 auf der Schienenstrecke 20 angibt. Die Positionsangabe POS kann beispielsweise durch Mittelwertbildung aus der bodenradarbasierten Ortsangabe O und einem Ortungsmesswert, den die weitere Orts-, Weg- und/oder Geschwindigkeitsangabe O2 selbst bildet oder den die Auswerteinrichtung 70 mit dieser errechnet, gebildet werden.

Die Kommunikationseinrichtung 50 kann die Positionsangabe POS aussenden, beispielsweise an andere Schienenfahrzeuge und/oder an eine streckenseitige Einrichtung.

Bei dem Ausführungsbeispiel gemäß Figur 2 weist die weitere fahrzeugseitige Einrichtung 60 eine Ortungseinheit 61 sowie eine mit dieser in Verbindung stehende Antenne 62 auf. Die fahrzeugseitige Einrichtung 60 ist derart ausgestaltet, dass sie streckenseitig verlegte Ortsmarken 23, wie beispielsweise Balisen (z. B. Eurobalise), die im Gleisoberbau 21 bzw. der Strecke 20 verlegt sind, erkennen und anhand erkannter Ortsmarken 23 die weitere Orts-, Weg- und/oder Geschwindigkeitsangabe O2 erzeugen kann.

Die weitere fahrzeugseitige Einrichtung 60 kann alternativ zu einer Erkennung von Ortsmarken 23 auf anderen Messverfahren basieren, beispielsweise kann die fahrzeugseitige Einrichtung 60 eine Geschwindigkeits- oder Wegmesseinrichtung sein, die anhand eines gemessenen Wegstreckenmesswerts die weitere Orts-, Weg- und/oder Geschwindigkeitsangabe O2 erzeugt. So ist es beispielsweise möglich, als weitere fahrzeugseitige Einrichtung 60 eine Radareinrichtung einzusetzen, die anhand ausgesandter Radarsignale und empfangener Radarsignale die jeweilige Geschwindigkeit des Schienenfahrzeugs 10 ermittelt und anhand der jeweiligen Geschwindigkeitsangaben durch Integration den jeweiligen Ort des Schienenfahrzeugs 10 auf der Schienenstrecke 20 ermittelt. Bezüglich einer solchen Bestimmung einer Orts-, Weg- und/oder Geschwindigkeitsangabe sei auf die oben genannte Druckschrift zum Stand der Technik verwiesen.

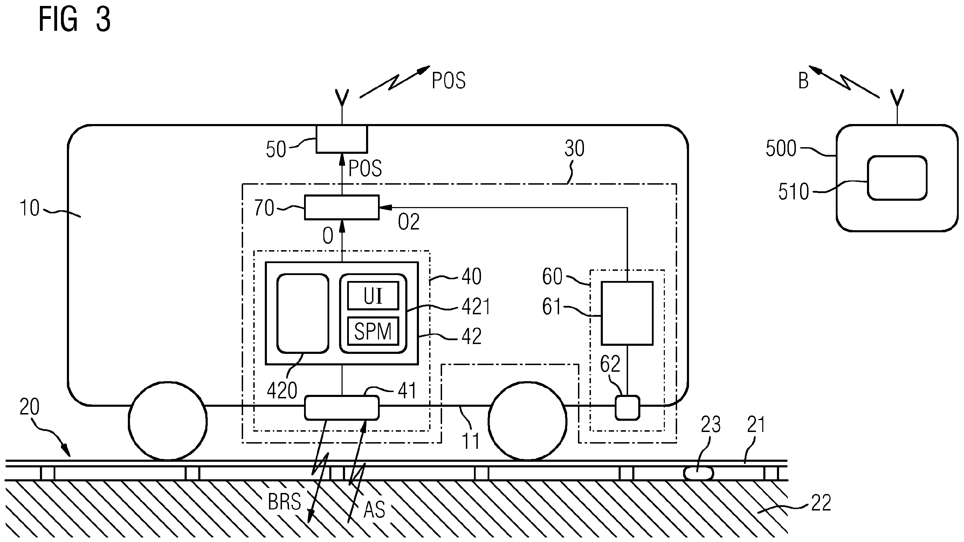

Die Figur 3 zeigt in einem nicht-beanspruchten Beispiel das Schienenfahrzeug 10 gemäß Figur 2 sowie darüber hinaus eine streckenseitige Einrichtung 500, die mit einer streckenseitigen Kommunikationseinrichtung 510 zur Kommunikation mit Schienenfahrzeugen geeignet ist. Die streckenseitige Einrichtung 500 wertet von den Schienenfahrzeugen, insbesondere dem Schienenfahrzeug 10 gemäß Figur 3, übermittelte und zumindest auch auf bodenradarbasierten Ortsangaben O basierte Positionsangaben POS aus. Anhand der Auswertergebnisse kann die Einrichtung 500 Betriebsbefehle B, insbesondere Fahrbefehle oder Haltebefehle, für die Schienenfahrzeuge und/oder Stellbefehle für streckenseitige Einrichtungen erzeugen.

Die bodenradarbasierte Ortsangabe O und/oder eine mit dieser gebildete Positionsangabe POS kann in vorteilhafter Weise im Zusammenhang mit folgenden Anwendungen bzw. mit der Lösung folgender Problemstellungen verwendet werden:
- Kuppeln von Zügen
- Präzises Halten, z. B. an Bahnsteigtüren
- Dichtes Abstellen zu einem anderen Zug und/oder zum Gleisabschluss
- Sichere Abstandshaltung
- Kollisionsvermeidung
- Gleisbesetztmeldung
- Fahrgastinformation
- Steuerung von Zügen

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie er durch die folgenden Ansprüche definiert ist.

### Bezugszeichenliste

- 10: Schienenfahrzeug
- 11: Fahrzeugboden
- 20: Schienenstrecke
- 21: Gleisoberbau
- 22: Boden
- 23: Ortsmarken
- 30: Positionsbestimmungseinrichtung
- 40: Ortungseinrichtung
- 41: Sende- und Empfangseinheit
- 42: Steuereinrichtung
- 50: Kommunikationseinrichtung
- 60: fahrzeugseitige Einrichtung
- 61: Ortungseinheit
- 62: Antenne
- 70: Auswerteinrichtung
- 420: Recheneinrichtung
- 421: Speicher
- 500: Einrichtung
- 510: Kommunikationseinrichtung

- AS: Antwortsignal
- B: Betriebsbefehle
- BRS: Bodenradarsignal
- O: Ortsangaben
- O2: Orts-, Weg- und/oder Geschwindigkeitsangabe
- POS: Positionsangabe
- SPM: Steuerprogrammmodul
- UI: Untergrundinformationen

## Patentansprüche

1. Verfahren zur Positionsbestimmung eines auf einer Schienenstrecke (20) fahrenden Schienenfahrzeugs (10), wobei bei dem Verfahren ein Radarsignal ausgesandt wird, ein zurückkommendes Radarsignal empfangen wird und der Ort des Schienenfahrzeugs (10) unter Heranziehung der Radarsignale bestimmt wird,
wobei
- in Richtung des die Schienenstrecke (20) tragenden Bodens (22) als Bodenradarsignal (BRS) ein Radarpulssignal oder ein frequenzmoduliertes Dauerstrichradarsignal in den Boden (22) gestrahlt wird, und zwar mit einer Strahlleistung, die ein Eindringen des Bodenradarsignals (BRS) mit einer mittleren Eindringtiefe von mindestens einem halben Meter in den Boden (22) ermöglicht, und aus dem Bodeninneren zumindest zum Teil als Antwortsignal (AS) in Form eines Tiefenprofilsignals des Bodens zum Schienenfahrzeug (10) zurückgelangt,
- das Antwortsignal (AS) unter Bildung einer Untergrundinformation (UI), die eine Tiefenprofilinformation des Bodens ist, ausgewertet wird,
- die Untergrundinformation (UI) mit für die Schienenstrecke (20) vorab erfassten und ortsbezogen abgespeicherten Untergrundinformationen (UI) verglichen wird,
- anhand des Vergleichsergebnisses eine bodenradarbasierte Ortsangabe (O) ermittelt wird und
- die Position des Schienenfahrzeugs (10) auf der Schienenstrecke (20) fahrzeugseitig zumindest auch anhand der bodenradarbasierten Ortsangabe (O) bestimmt wird.

2. Verfahren nach Anspruch 1,
**dadurch gekennzeichnet, dass**
- das Bodenradarsignal (BRS) mit einer am Fahrzeugboden (11) des Schienenfahrzeugs (10) angeordneten Sende- und Empfangseinheit (41) in einen Abschnitt des Gleisoberbaus eingestrahlt wird, der unterhalb des Schienenfahrzeugs (10) liegt,
- das zurückkommende Bodenradarsignal (BRS) mit der genannten oder einer anderen am Fahrzeugboden (11) des Schienenfahrzeugs (10) angeordneten Sende- und Empfangseinheit (41) gemessen und unter Bildung der Untergrundinformationen (UI) ausgewertet wird.

3. Verfahren nach einem der voranstehenden Ansprüche,
**dadurch gekennzeichnet, dass** die Position des Schienenfahrzeugs (10) auf der Schienenstrecke (20) ausschließlich anhand der bodenradarbasierten Ortsangabe (O) bestimmt wird.

4. Verfahren nach einem der voranstehenden Ansprüche 1 bis 2, **dadurch gekennzeichnet, dass**
- mindestens eine weitere Orts-, Weg- und/oder Geschwindigkeitsangabe (O2) ermittelt wird und
- mit der bodenradarbasierten Ortsangabe (O) und der zumindest einen weiteren Orts-, Weg- und/oder Geschwindigkeitsangabe (O2) die Positionsbestimmung erfolgt.

5. Verfahren nach Anspruch 4,
**dadurch gekennzeichnet, dass**
- schienenstreckenseitig Ortsmarken (23) installiert sind und
- fahrzeugseitig eine Ortsmarkenerkennungseinrichtung vorgesehen ist, die anhand empfangener Ortmarkensignale die mindestens eine weitere Orts-, Weg- und/oder Geschwindigkeitsangabe (O2) erzeugt.

6. Verfahren nach einem der voranstehenden Ansprüche 4 bis 5, **dadurch gekennzeichnet, dass** fahrzeugseitig eine Geschwindigkeits- oder Wegmesseinrichtung vorgesehen ist, die anhand eines gemessenen Wegstreckenmesswerts die mindestens eine weitere Orts-, Weg- und/oder Geschwindigkeitsangabe (O2) erzeugt.

7. Verfahren zum Betreiben von Schienenfahrzeugen,
**dadurch gekennzeichnet, dass**
- die Schienenfahrzeuge ihre jeweilige Position nach einem Verfahren gemäß einem der Ansprüche 1-6 unter Bestimmung von Positionsangaben (POS) ermitteln und
- die Schienenfahrzeuge ihre Positionsangaben (POS) zu einer streckenseitigen Einrichtung (500) oder zu anderen Fahrzeugen übermitteln.

8. Schienenfahrzeug (10) mit einer Positionsbestimmungseinrichtung (30), die geeignet ist, ein Radarsignal auszusenden, ein zurückkommendes Radarsignal zu empfangen und den Ort des Schienenfahrzeugs (10) unter Heranziehung der Radarsignale zu bestimmen,
wobei
die Positionsbestimmungseinrichtung (30) eine bodenradarbasierte Ortungseinrichtung (40) umfasst, die
- in Richtung des die Schienenstrecke (20) tragenden Bodens (22) ein Bodenradarsignal (BRS) strahlt,
wobei als Bodenradarsignal (BRS) ein Radarpulssignal oder ein frequenzmoduliertes Dauerstrichradarsignal in den Boden (22) gestrahlt wird, und zwar mit einer Strahlleistung, die ein Eindringen des Bodenradarsignals (BRS) mit einer mittleren Eindringtiefe von mindestens einem halben Meter in den Boden (22) ermöglicht, und aus dem Bodeninneren zumindest zum Teil als Antwortsignal (AS) in Form eines Tiefenprofilsignals des Bodens zum Schienenfahrzeug (10) zurückgelangt,
- das Antwortsignal (AS) unter Bildung einer Untergrundinformation (UI), die eine Tiefenprofilinformation des Bodens ist, auswertet,
- die Untergrundinformation (UI) mit abgespeicherten, anhand der Schienenstrecke (20) vorab erfassten Untergrundinformationen (UI) vergleicht und
- anhand des Vergleichsergebnisses eine bodenradarbasierte Ortsangabe (O) ermittelt.

9. Schienenfahrzeug (10) nach Anspruch 8,
**dadurch gekennzeichnet, dass**
die Positionsbestimmungseinrichtung (30) eine die jeweilige Position des Schienenfahrzeugs (10) auf der Schienenstrecke (20) angebende Positionsangabe (POS) ausschließlich anhand der bodenradarbasierten Ortsangabe (O) erzeugt.

10. Schienenfahrzeug (10) nach Anspruch 8,
**dadurch gekennzeichnet, dass**
- die Positionsbestimmungseinrichtung (30) mindestens eine weitere fahrzeugseitige Einrichtung (500) zur Ermittlung mindestens einer weiteren Orts-, Weg- und/oder Geschwindigkeitsangabe (O2) aufweist und
- die Positionsbestimmungseinrichtung (30) eine die jeweilige Position des Schienenfahrzeugs (10) auf der Schienenstrecke (20) angebende Positionsangabe (POS) anhand der bodenradarbasierten Ortsangabe (O) und der zumindest einen weiteren Orts-, Weg- und/oder Geschwindigkeitsangabe (O2) erzeugt.

11. Schienenfahrzeug (10) nach einem der voranstehenden Ansprüche 8 bis 10,
**dadurch gekennzeichnet, dass** das Schienenfahrzeug (10) eine mit der Positionsbestimmungseinrichtung (30) in Verbindung stehende Kommunikationseinrichtung (50) umfasst, die die bodenradarbasierte Ortsangabe (O) oder eine damit gebildete, die jeweilige Position des Schienenfahrzeugs (10) angebende Positionsangabe (POS) an eine streckenseitige Einrichtung (500) oder andere Fahrzeuge übermittelt.

## Claims

1. Method for position determination of a rail vehicle (10) travelling on a stretch of track (20), wherein in the method a radar signal is emitted, a returning radar signal is received and the location of the rail vehicle (10) is determined using the radar signals,
wherein
- in the direction of the ground (22) carrying the stretch of track (20), a radar pulse signal or a frequency-modulated continuous wave radar signal is beamed into the ground (22) as a ground radar signal (BRS), namely with a beam power that enables a penetration of the ground radar signal (BRS) into the ground (22) with an average penetration depth of at least half a metre, and returns to the rail vehicle (10) from inside the ground, at least partially, as a response signal (AS) in the form of a depth profile signal of the ground,
- the response signal (AS) is evaluated with the formation of an item of underground information (UI), which is an item of depth profile information for the ground,
- the underground information (UI) is compared with underground information (UI) that has been captured in advance and saved in a location-specific manner for the stretch of track (20),
- a ground radar-based location indicator (O) is ascertained on the basis of the result of the comparison and
- the position of the rail vehicle (10) on the stretch of track (20) is determined on the vehicle side at least also on the basis of the ground radar-based location indicator (O).

2. Method according to claim 1,
**characterised in that**
- the ground radar signal (BRS) is beamed into a section of the track bed, which lies below the rail vehicle (10), using a transceiver unit (41) arranged on the vehicle base (11) of the rail vehicle (10),
- the returning ground radar signal (BRS) is measured using the aforementioned or another transceiver unit (41) arranged on the vehicle base (11) of the rail vehicle (10) and is evaluated with the formation of the underground information (UI) .

3. Method according to one of the preceding claims,
**characterised in that**
the position of the rail vehicle (10) on the stretch of track (20) is exclusively determined on the basis of the ground radar-based location indicator (O).

4. Method according to one of the preceding claims 1 to 2,
**characterised in that**
- at least one further location, distance and/or speed indicator (O2) is ascertained and
- the position determination takes place using the ground radar-based location indicator (O) and the at least one further location, distance and/or speed indicator (O2).

5. Method according to claim 4,
**characterised in that**
- location markers (23) are installed on the side of the stretch of track and
- a location marker identification facility is provided on the vehicle side, which generates the at least one further location, distance and/or speed indicator (O2) on the basis of received location marker signals.

6. Method according to one of the preceding claims 4 to 5,
**characterised in that**
a speed or distance measurement facility is provided on the vehicle side, which generates the at least one further location, distance and/or speed indicator (O2) on the basis of a measured covered distance measurement value.

7. Method for operating rail vehicles,
**characterised in that**
- the rail vehicles ascertain their respective position according to a method according to one of claims 1-6, with the determination of position indicators (POS), and
- the rail vehicles transmit their position indicators (POS) to a trackside facility (500) or to other vehicles.

8. Rail vehicle (10) with a position determination facility (30), which is suitable to emit a radar signal, to receive a returning radar signal and to determine the location of the rail vehicle (10) using the radar signals,
wherein
the position determination facility (30) comprises a ground radar-based locating facility (40), which
- beams a ground radar signal (BRS) in the direction of the ground (22) carrying the stretch of track (20),
wherein a radar pulse signal or a frequency-modulated continuous wave radar signal is beamed into the ground (22) as a ground radar signal (BRS), namely with a beam power that enables a penetration of the ground radar signal (BRS) into the ground (22) with an average penetration depth of at least half a metre, and returns to the rail vehicle (10) from inside the ground, at least partially, as a response signal (AS) in the form of a depth profile signal of the ground,
- evaluates the response signal (AS) with the formation of an item of underground information (UI), which is an item of depth profile information for the ground,
- compares the underground information (UI) with saved underground information (UI) that has been captured in advance on the basis of the stretch of track (20) and
- ascertains a ground radar-based location indicator (O) on the basis of the result of the comparison.

9. Rail vehicle (10) according to claim 8,
**characterised in that**
the position determination facility (30) exclusively generates a position indicator (POS), which indicates the respective position of the rail vehicle (10) on the stretch of track (20), on the basis of the ground radar-based location indicator (O).

10. Rail vehicle (10) according to claim 8,
**characterised in that**
- the position determination facility (30) has at least one further vehicle-side facility (500) for ascertaining at least one further location, distance and/or speed indicator (O2) and
- the position determination facility (30) generates a position indicator (POS), which indicates the respective position of the rail vehicle (10) on the stretch of track (20), on the basis of the ground radar-based location indicator (O) and the at least one further location, distance and/or speed indicator (O2).

11. Rail vehicle (10) according to one of the preceding claims 8 to 10,
**characterised in that**
the rail vehicle (10) comprises a communication facility (50) connected to the position determination facility (30), which transmits the ground radar-based location indicator (O) or a position indicator (POS), which is formed thereby and indicates the respective position of the rail vehicle (10), to a trackside facility (500) or other vehicles.

## Revendications

1. Procédé de détermination de la position d'un véhicule (10) ferroviaire circulant sur une voie (20) de chemin de fer, dans lequel, dans le procédé, on émet un signal radar, on reçoit un signal radar revenant et on détermine l'emplacement du véhicule (10) ferroviaire en tirant parti des signaux radar,
dans lequel,
- on émet dans le sol (22) en direction du sol (22) portant la voie (20) de chemin de fer, comme signal (BRS) radar de sol, un signal pulsé radar ou un signal à émission continue modulé en fréquence et cela avec une puissance de rayonnement, qui rend possible une pénétration du signal (BRS) radar de sol à une profondeur moyenne de pénétration d'au moins un demi-mètre dans le sol (22) et qui parvient de l'intérieur du sol - au moins en partie - comme signal (AS) sous la forme d'un signal de profil de profondeur du sol au véhicule (10) ferroviaire,
- on exploite le signal (AS) de réponse en formant une information (UI) de sous-sol, qui est une information de profil de profondeur du sol,
- on compare l'information (UI) de sous-sol à des informations de sous-sol détectées précédemment pour la voie (20) de chemin de fer et mises en mémoire en fonction de l'emplacement,
- on détermine à l'aide du résultat de la comparaison une indication (O) d'emplacement reposant sur le radar du sol, et
- on détermine la position du véhicule ferroviaire sur la voie (20) de chemin de fer du côté du véhicule au moins également à l'aide de l'indication (O) d'emplacement reposant sur le radar du sol.

2. Procédé suivant la revendication 1,
**caractérisé en ce que**
- on émet le signal (BRS) de radar du sol par une unité (41) d'émission et de réception disposée sur le plancher (11) du véhicule (10) ferroviaire, dans une partie de la voie ferrée, qui est en dessous du véhicule (10) ferroviaire,
- on mesure le signal (BRS) radial de sol revenant par ladite ou une autre unité (41) d'émission et de réception disposée sur le plancher (11) du véhicule ferroviaire, et on l'exploite en formant des informations (UI) de sous-sol.

3. Procédé suivant l'une des revendications précédentes, **caractérisé en ce que**
l'on détermine la position du véhicule (10) ferroviaire sur la voie (20) de chemin de fer exclusivement à l'aide des indications (O) d'emplacement, reposant sur le radar de sol.

4. Procédé suivant l'une des revendications 1 à 2 précédentes, **caractérisé en ce que**
- on détermine au moins une autre indication (O2) d'emplacement de trajet et/ou de vitesse et
- on effectue la détermination de la position par l'indication (O) d'emplacement reposant sur le radar de sol et par la au moins une autre indication d'emplacement de trajet et/ou de vitesse.

5. Procédé suivant la revendication 4,
**caractérisé en ce que**
- l'on installe des repères (23) d'emplacement du côté de la voie de chemin de fer et
- on prévoit du côté du véhicule un dispositif de reconnaissance de repère d'emplacement, qui produit à l'aide de signaux de repère d'emplacement, qui sont reçus, la au moins une autre indication (O2) d'emplacement de trajet et/ou de vitesse.

6. Procédé suivant l'une des revendications 4 à 5 précédentes, **caractérisé en ce qu'**il est prévu du côté du véhicule un dispositif de mesure de vitesse ou de trajet, qui produit à l'aide d'une valeur mesurée de mesure de trajet la au moins une autre indication (O2) d'emplacement et/ou de vitesse.

7. Procédé pour faire fonctionner des véhicules ferroviaires, **caractérisé en ce que**
- les véhicules ferroviaires déterminent leurs positions respectives par un procédé suivant l'une des revendications 1 à 6, en déterminant des indications (POS) de position et
- les véhicules ferroviaires transmettent leurs indications (POS) de position à un dispositif (500) du côté de la voie ou à d'autres véhicules.

8. Véhicule (10) ferroviaire ayant un dispositif (30) de détermination de position, qui est propre à émettre un signal radar, à recevoir un signal radar revenant et à déterminer l'emplacement du véhicule (10) ferroviaire en tirant parti des signaux radar,
dans lequel,
le dispositif de détermination de la position comprend un dispositif (40) de localisation reposant sur le radar de sol, qui
- envoie un signal (BRS) radar de sol en direction du sol (22) portant la voie (20) de chemin de fer, dans lequel on envoie dans le sol (22) comme signal (BRS) radar de sol, un signal pulsé radar ou un signal radar à émission continue modulé en fréquence et cela à une puissance de rayonnement, qui rend possible une pénétration du signal (BRS) radar de sol à une profondeur moyenne de pénétration d'au moins un demi-mètre dans le sol (22) et qui revient de l'intérieur du sol au véhicule (10) ferroviaire - au moins en partie - comme signal (AS) de réponse sous la forme d'un signal de profil de profondeur du sol,
- exploite le signal (AS) de réponse en formant une information (UI) de sous-sol, qui est une information de profil de profondeur du sol,
- compare l'information (UI) de sous-sol à des informations (UI) de sous-sol mises en mémoire et détectées auparavant à l'aide de la voie (20) ferrée, et
- à l'aide du résultat de la comparaison, détermine une indication (O) d'emplacement reposant sur le radar du sol.

9. Véhicule (10) ferroviaire suivant la revendication 8, **caractérisé en ce que**
le dispositif (30) de détermination de la position produit une indication (POS) de position indiquant la position respective du véhicule (10) ferroviaire sur la voie (20) de chemin de fer exclusivement à l'aide de l'indication (O) d'emplacement reposant sur le radar de sol.

10. Véhicule (10) ferroviaire suivant la revendication 8, **caractérisé en ce que**
- le dispositif (30) de détermination de la position a au moins un autre dispositif (500) du côté du véhicule pour la détermination d'au moins une autre indication (O2) d'emplacement de trajet et/ou de vitesse, et
- le dispositif (30) de détermination de la position produit à l'indication (O) d'emplacement reposant sur le radar du sol et de la au moins une autre indication (O2) d'emplacement de trajet et/ou de vitesse, une indication (POS) de position indiquant la position respective des véhicules (10) ferroviaires sur la voie (20) de chemin de fer.

11. Véhicule (10) ferroviaire suivant l'une des revendications 8 à 10 précédentes,
**caractérisé en ce que**
le véhicule (10) ferroviaire comprend un dispositif (50) de communication, qui est en communication avec le dispositif (30) de détermination de la position et qui transmet l'indication (O) d'emplacement reposant sur le radar de sol ou une indication (POS) de position qui en est formée et qui indique la position respective du véhicule (10) ferroviaire à un dispositif (500) du côté de la voie ou à d'autres véhicules.
